# EUROPEAN PATENT APPLICATION

(11) **EP 4 205 831 A1**
(43) Date of publication of application: **05.07.2023**
(21) Application number: 21218444.4
(22) Date of filing: 31.12.2021
(51) Int. Cl.: B01D 53/04, B01D 53/26, B65D 81/26, B65D 51/30

(54) **GAS-PERMEABLE AND LIQUID-TIGHT RECEPTACLE FOR AN ACTIVE SUBSTANCE**

(71) Applicant: Airnov, Inc., New Castle, DE 19808 (US)
(72) Inventor: BESCHON, Séverine, 41200 Romorantin-Lanthenay (FR); OHL, Sébastien, 92240 Malakoff (FR)
(74) Representative: Hoffmann Eitle

(57) **Abstract**

This receptacle (1) comprises a body portion (2) and at least one cap portion (4) configured to close an open end (26) of the body portion (2), the cap portion (4) being impermeable to liquids and permeable to gases. The body portion (2) and the cap portion (4) define together a chamber (3) for an active substance (5). The body portion (2) comprises a side wall (22) defining a transverse flange (23) in the vicinity of the open end (26). The cap portion (4) comprises a base wall (40) and a sealing skirt (42) internally offset relative to an outer periphery (41) of the base wall (40) so that a transverse edge (43) is defined between the sealing skirt (42) and the outer periphery (41) of the base wall. In the assembled configuration of the body portion (2) and the cap portion (4), the cap portion (4) is in a sealing position in which the sealing skirt (42) is sealingly pressed against an inner surface (24) of the side wall (22) in such a way that a liquid-tight seal is formed between the body portion (2) and the cap portion (4), while the transverse edge (43) of the cap portion (4) is in abutment against the transverse flange (23) of the body portion (2).

## Description

### FIELD OF THE INVENTION

The present invention relates to a receptacle, such as a capsule, a canister or a stopper, for regulating an atmosphere in a packaging or a medical device containing sensitive and/or odorous products. Such a receptacle may be used, for example, in a packaging filled with sensitive products such as food, nutraceutical products, pharmaceutical products or diagnostic products, or in a compartment defined in a medical device, notably in an inhaler such as a DPI (Dry Powder Inhaler) or in a diagnostic test cartridge. The invention also relates to a method for manufacturing such a receptacle and to a use of such a receptacle.

### BACKGROUND OF THE INVENTION

It is known to use a receptacle filled with an active substance to regulate the atmosphere in a packaging or a medical device. In particular, a number of small desiccant receptacles, also called capsules or canisters, have been disclosed, which are formed from gas- and liquid-impermeable body portions and onto which one or more perforated end caps are secured. These receptacles generally contain a desiccant material which adsorbs water vapor from the air as the air flows through the perforations provided in the end cap(s) of the receptacle.

US5759241A discloses a desiccant canister suitable for efficiently absorbing water vapor while at the same time eliminating the "dusting" problem present in prior art canisters when they are used with a desiccant material in a powder form with very fine particles, such as activated carbon. To prevent the powder from passing through the perforations of its end cap, the canister of US5759241A comprises a gas-permeable disc-shaped member secured to the end cap, so as to cover substantially all of the perforations of the end cap. In this way, the gas-permeable member assists in retaining the desiccant material within the canister. The gas-permeable member is formed, e.g., from a spun bonded polyolefin such as TYVEK^{®} material. Even if the gas-permeable member is said to be liquid-impermeable, US5759241A does not disclose that the resulting canister is liquid-tight and can contain an active substance in liquid or gel form. In addition, the positioning of the gas-permeable member to cover the perforations of the end cap requires a specific alignment of the gas-permeable member in the end cap, which is not easily automated and limits the production rates.

It is these drawbacks that the invention is intended more particularly to remedy by proposing a gas-permeable receptacle for atmosphere regulation, which is liquid-tight and which can be easily manufactured at high production rates, e.g. higher than 50 receptacles per minute.

### DISCLOSURE OF THE INVENTION

For this purpose, a subject of the invention is a receptacle, such as a capsule, a canister or a stopper, for regulating an atmosphere in a packaging or a medical device containing sensitive and/or odorous products, the receptacle comprising a body portion and at least one cap portion configured to close an open end (26) of the body portion, the at least one cap portion being impermeable to liquids and permeable to gases, the body portion and the at least one cap portion together defining a chamber for an active substance, wherein the body portion comprises a side wall defining a transverse flange in the vicinity of the open end, wherein the at least one cap portion comprises a base wall and a sealing skirt internally offset relative to an outer periphery of the base wall so that a transverse edge is defined between the sealing skirt and the outer periphery of the base wall, wherein, in the assembled configuration of the body portion and the at least one cap portion, the at least one cap portion is in a sealing position in which the sealing skirt is sealingly pressed against an inner surface of the side wall of the body portion in such a way that a liquid-tight seal is formed between the body portion and the at least one cap portion, while the transverse edge of the at least one cap portion is in abutment against the transverse flange of the body portion.

It is understood that, in the sealing position, the abutment, i.e. the contact, between the transverse edge of the at least one cap portion and the transverse flange of the body portion does not need to be continuous over the entire circumference of the body portion. In particular, the term "abutment" encompasses an abutment on a network of ribs and a continuous flat abutment over the entire periphery of the transverse edge of the at least one cap portion.

Thanks to the specific geometry of the at least one cap portion with a sealing skirt and a transverse edge, the liquid-tight seal between the body portion and the at least one cap portion is efficiently formed. The interaction between the transverse edge and the transverse flange serves to create a mechanical stop, which ensures the correct longitudinal positioning of the at least one cap portion on the body portion, the at least one cap portion then being advantageously held between the transverse flange and a crimped lip of the body portion.

In this way, the receptacle is adapted to contain in a liquid-tight manner an active substance, e.g. in liquid or gel form, while still allowing a gas exchange with the outside of the receptacle thanks to the permeability to gases of the at least one cap portion. In addition, the presence of the sealing skirt of the at least one cap portion makes it possible to guide the cap portion toward its sealing position relative to the body portion, which ensures a homogeneous sealing over the periphery of the body portion even when the receptacle is manufactured with an automated assembly of the body portion and the cap portion.

According to one embodiment, in the sealing position of the at least one cap portion, the transverse edge of the at least one cap portion is sealingly pressed against the transverse flange of the body portion over its entire periphery. With such an arrangement, the liquid-tight seal between the body portion and the at least one cap portion is formed in two directions, i.e., on the one hand, parallel to a main axis of the open end of the body portion, by engagement of the sealing skirt against the inner surface of the side wall of the body portion and, on the other hand, transversally to the main axis of the open end of the body portion, by engagement of the transverse edge against the transverse flange of the body portion. In this case, the second seal provided by the interaction between the transverse edge and the transverse flange transversally to the main axis results in an increased liquid-tightness of the receptacle.

According to one embodiment, the sealing skirt of the at least one cap portion has an inwardly slanted sealing surface configured to be pressed against the inner surface of the side wall of the body portion. With such an inwardly slanted sealing surface, the sealing contact between the sealing skirt of the cap portion and the side wall of the body portion tends to be a line contact, making it possible to compensate for dimensional variations of the body portion. In practice, an optimum sealing contact in the assembled configuration is obtained thanks to the deformation of the sealing surface along the contact line. The tapered sealing skirt also allows the cap portion to be pre-positioned and pre-centered relative to the open end of the body portion, so that the displacement of the cap portion toward its sealing position can then be achieved simply, e.g. by applying a pushing force on the cap portion parallel to the main axis of the open end. This feature of pre-positioning and pre-centering can also be achieved with a sealing skirt having an engagement chamfer at its end, but otherwise formed with a substantially cylindrical surface (except for the draft angle) intended to be pressed against the inner surface of the side wall of the body portion.

According to one embodiment, the at least one cap portion of the receptacle is secured to the body portion by press fitting between the sealing skirt of the at least one cap portion and the inner surface of the side wall of the body portion. The assembly of the at least one cap portion with the body portion by press fitting (or friction fitting) is advantageous in that it can be achieved easily, e.g. by applying a pushing force on the at least one cap portion parallel to a main axis of the open end of the body portion. As a variant or in addition to the press fitting, the at least one cap portion may be secured to the body portion by ultrasonic welding, adhesive sealing or any other method commonly used in the industry. A retaining member, e.g. a snap-fastening member, can also be added on the face of the at least one cap portion on the opposite side from the transverse edge.

According to one feature of the invention, the body portion of the receptacle comprises a guiding surface for automatically positioning the at least one cap portion in its sealing position, with its transverse edge in abutment against the transverse flange of the body portion and its sealing skirt pressed against the inner surface of the side wall of the body portion, upon relative displacement of the body portion and the at least one cap portion parallel to a main axis of the open end of the body portion. Such a guiding surface ensures automatic centering of the at least one cap portion relative to the body portion, which ensures a homogeneous sealing over the periphery of the body portion. In practice, a pushing force may be applied on the at least one cap portion while the body portion, pre-filled with the active substance, is held stationary.

In one embodiment, the body portion of the receptacle comprises a lip which extends from the side wall, beyond the transverse flange, and the guiding surface is formed by an inner surface of the lip which is slanted inwardly toward the transverse flange.

In one embodiment, the body portion of the receptacle comprises a lip which extends from the side wall, beyond the transverse flange, the lip being configured to be crimped around the periphery of the cap portion so as to maintain the cap portion in its sealing position, with its transverse edge in abutment against the transverse flange of the body portion and its sealing skirt pressed against the inner surface of the side wall of the body portion. In this case, a compressive force is also advantageously applied by the crimping lip on the cap portion, so that the thickness of the cap portion in the assembled configuration is less than its original thickness.

Advantageously, the same lip is used to provide the guiding surface ensuring the automatic positioning the at least one cap portion in its sealing position and to maintain the at least one cap portion in its sealing position by being crimped around its periphery.

According to one embodiment, the receptacle further comprises a gas-permeable stiffening cover, such as a cardboard or a perforated polymer-based cover, which is configured to be secured in contact with the base wall of the at least one cap portion when the cap portion is in its sealing position, with its transverse edge in abutment against the transverse flange of the body portion and its sealing skirt pressed against the inner surface of the side wall of the body portion. The gas-permeable stiffening cover, which is preferably positioned in contact with the outer surface of the base wall of the cap portion, stiffens the structure of the cap portion and thus reinforces the liquid-tight seal between the body portion and the cap portion. Advantageously, the gas-permeable stiffening cover is also held in place by the lip of the body portion, which is crimped at the periphery of the stiffening cover and cap portion disposed on top of each other. In this configuration, the axial pressure exerted by the crimped lip is transmitted to the cap portion by the stiffening cover, the stiffening cover and the cap portion being both compressed between the transverse flange and the crimped lip of the body portion.

According to one embodiment, the base wall of the at least one cap portion comprises at least one reinforcing rib, preferably several reinforcing ribs, extending radially across the inner surface of the base wall of the cap portion and internally relative to the sealing skirt. Such reinforcing ribs provide structural support for the cap portion, thus securing the liquid-tight seal between the body portion and the cap portion.

According to one feature of the invention, the at least one cap portion of the receptacle is made of a thermoplastic elastomer (TPE) having a Water Vapor Transmission Rate (WVTR) higher than or equal to 10 g.mm/m².day, preferably higher than or equal to 30 g.mm/m².day, measured according to the desiccant method of industry standard ASTM E96 ("Standard Test Methods for Water Vapor Transmission of Materials") at 38°C, 90%RH, and being normalized with respect to the thickness (i.e., it is a "thickness-normalized WVTR", even if the standard ASTM E96 does not mention such a normalization). The WVTR of the constituent material of the at least one cap portion is a measure of the passage of water vapor through the material. The thickness-normalized value makes it possible to depend only on the material, without dependence on the thickness of the film.

In one embodiment, the at least one cap portion is made of a polyether block amide (PEBA). Typical examples of PEBA are known under the tradename of PEBAX^{®} (Arkema), VESTAMID^{®} E (Evonik Industries) and Irgastat^{®} (BASF). PEBA is a block copolymer obtained by polycondensation of a carboxylic acid polyamide (PA6, PA11, PA12) with an alcohol termination polyether (polytetramethylene oxide - which typically leads to so-called hydrophobic PEBA, or polyethylene oxide - which typically leads to so-called hydrophilic PEBA). The general chemical structure of PEBA is:

HO - (CO - PA - CO - O - PE - O)ₙ - H

in which PA stands for the polyamide part and PE for the polyether part.

PEBA is a high-performance thermoplastic elastomer having lower density among TPE, superior mechanical and dynamic properties (flexibility, impact resistance, energy return, fatigue resistance) and keeping these properties at low temperature (lower than -40 °C), and good resistance against a wide range of chemicals. In particular, the selected PEBA exhibits both a sufficient flexibility to allow the insertion of the cap portion toward its sealing position in the body portion, and a sufficient rigidity to allow the liquid-tight seal between the body portion and the at least one cap portion to be maintained in the long term. Examples of PEBA grades that have proven suitable for the purpose of the present invention include PEBAX^{®} MV1074 SA01 MED (a hydrophilic PEBA) and PEBAX^{®} 4033 (a hydrophobic PEBA), both available from Arkema.

It is noted that thermoplastic elastomers (TPE) other than PEBA may also be used for the at least one cap portion of the receptacle. Examples of other suitable thermoplastic elastomers (TPE) include, without limitation: thermoplastic polyurethanes; thermoplastic polyester elastomers; polypropylene-based thermoplastic elastomers; ethylene butyl acrylate (EBA); ethylene vinyl acetate (EVA); silicones; and any combination thereof.

According to one feature of the invention, the body portion of the receptacle is made of a polymer-based material which is impermeable to liquids and gases. Examples of suitable polymeric resins for the body portion include, without limitation: polyolefins such as polyethylene, e.g. high-density polyethylene (HDPE) or low-density polyethylene (LDPE), polypropylene, polybutylene, polyisobutylene; copolymers of ethylene such as for example ethylene vinyl acetates, ethylene ethyl acrylates, ethylene butyl acrylates, ethylene maleic anhydrides, ethylene alpha olefins; polystyrene; copolymers of styrene; polyethylene terephthalate (PET); polyvinylchloride (PVC); copolymers of vinyl chloride; polyvinylidene chlorides; derivatives of cellulose; polyamides; polycarbonates; polyoxymethylenes; copolyesters; polyphenylene oxides; polymethyl methacrylates; copolymers of acrylate; fluoride polymers; polyimides; polyurethanes; and any combination thereof.

According to one embodiment, each of the body portion and the at least one cap portion is obtained by molding, in particular injection molding, of a thermoplastic polymer material.

According to one embodiment, the water vapor absorption rate of the receptacle is higher than or equal to 10 mg/day, preferably higher than or equal to 30 mg/day at 40°C, 75%RH. The water vapor absorption rate of the receptacle can be measured by a gravimetric test method in which the receptacle is filled to at least 80% of its content capacity with a 4Å molecular sieve having a moisture content of less than 3% at the beginning of the test.

According to one embodiment, for the receptacle comprising the body portion and the at least one cap portion, a ratio of a water vapor release rate toward the outside of the receptacle to a water vapor absorption rate from the outside of the receptacle is higher than 2, preferably higher than 4. For the comparison between the measured water vapor release rate and the measured water vapor absorption rate of a receptacle, the difference in the relative humidity gradient has to be taken into account, as described in EXAMPLE 1 and EXAMPLE 2 below.

According to one embodiment, the chamber of the receptacle is at least partially filled with an active substance in liquid or gel form. Examples of active substances in liquid or gel form that may be contained in the receptacle of the invention include, without limitation: a saturated aqueous salt solution, a glycerol-water mixture, a hydrated superabsorbent polymer (SAP), etc., which are configured to control equilibrium humidity, i.e. to both absorb and/or release water vapor from/to the atmosphere surrounding the receptacle. It is understood that, within the meaning of the invention, the term "absorb", when referring to a given active substance, with respect to water, is used to encompass all chemical and physical phenomena by which water may be retained by said active substance. In particular, this includes bulk phenomena, generally referred to as "absorption", where water molecules enter the material of the active substance; or surface phenomena, generally referred to as "adsorption", where water molecules attach to the surface of the material of the active substance. For saturated aqueous salt solutions, reference is made to the literature known in the art providing lists of saturated salt solutions with their equilibrium relative humidity at a given temperature, for example "Humidity Fixed Points of Binary Saturated Aqueous Solutions", Lewis Greenspan (October 22, 1976). The liquid-tight receptacle of the invention is also well adapted to contain calcium chloride which can liquefy by absorbing moisture from the air.

According to one embodiment, the chamber of the receptacle is at least partially filled with an active substance in powder form including fine particles with a size of less than or equal to 200 µm. An example of an active substance in powder form with such fine particles is activated carbon.

Another subject of the invention is a method for manufacturing a receptacle as described above, comprising steps of:
- pre-positioning a cap portion in an open end of the body portion, with its sealing skirt in contact with the transverse flange of the body portion;
- securing the cap portion so as to liquid-tightly close the open end of the body portion, by moving the body portion and the cap portion relative to each other, parallel to the main axis of the open end of the body portion, until the cap portion reaches its sealing position in which its transverse edge is in abutment against the transverse flange of the body portion and its sealing skirt is pressed against an inner surface of the side wall.

According to one feature of the manufacturing method, when the body portion has a first closed end and a second open end, where the first closed end may be closed either by a bottom wall of the body portion integral with the side wall or by securing a first cap portion so as to liquid-tightly close the first end of the body portion as described above, the method comprises a step of at least partially filling with an active substance the inner volume of the body portion delimited by the side wall and the first closed end, before securing a cap portion so as to liquid-tightly close the second open end of the body portion as described above.

According to one embodiment of the manufacturing method, the body portion comprises a lip extending from the side wall beyond the transverse flange, the method further comprises a step of crimping the lip around the periphery of the cap portion so as to maintain the cap portion in its sealing position.

According to one embodiment of the manufacturing method, the body portion comprises a lip extending from the side wall beyond the transverse flange, said lip comprising a guiding surface for automatically positioning the cap portion in its sealing position when the body portion and the cap portion are moved relative to each other parallel to the main axis of the open end.

According to one embodiment of the manufacturing method, the method further comprises a step of positioning a gas-permeable stiffening cover, such as a cardboard or a perforated polymer-based cover, in contact with the base wall of the cap portion when the cap portion is in its sealing position.

According to one embodiment of the manufacturing method, the method further comprises a step of crimping the lip of the body portion around the periphery of both the stiffening cover and the cap portion disposed on top of each other.

Another subject of the invention is a use of a receptacle as described above, having its chamber at least partially filled with a humidity control substance, for controlling humidity in a packaging or a medical device containing moisture-sensitive products, such as tablets or capsules containing a pharmaceutical composition; nutraceuticals; herbalism products; diagnostic products.

### BRIEF DESCRIPTION OF THE DRAWINGS

Features and advantages of the invention will become apparent from the following description of embodiments of a receptacle and a manufacturing method according to the invention, this description being given merely by way of example and with reference to the appended drawings in which:
Figure 1 is a perspective view of a receptacle according to a first embodiment of the invention, which is a humidity control capsule having its chamber filled with a humidity control liquid, for example a saturated aqueous salt solution, a glycerol-water mixture, etc.;
Figure 2 is a cross section along the line II-II of Figure 1;
Figure 3 is a top view of the cap portion of the humidity control capsule of Figure 1 on the side of the sealing skirt;
Figure 4 is a cross section similar to Figure 2 showing successive positioning of the cap portion and the stiffening cover to close the open end of the body portion, before crimping the lip of the body portion around the periphery of the superposed stiffening cover and cap portion;

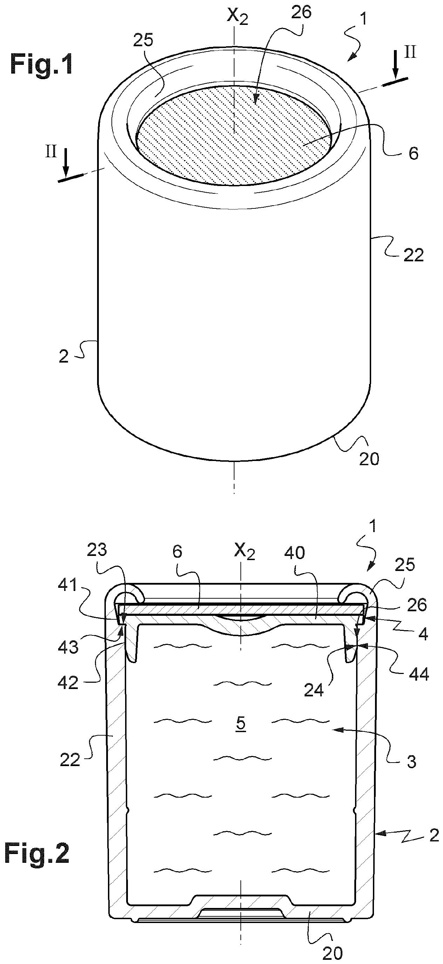

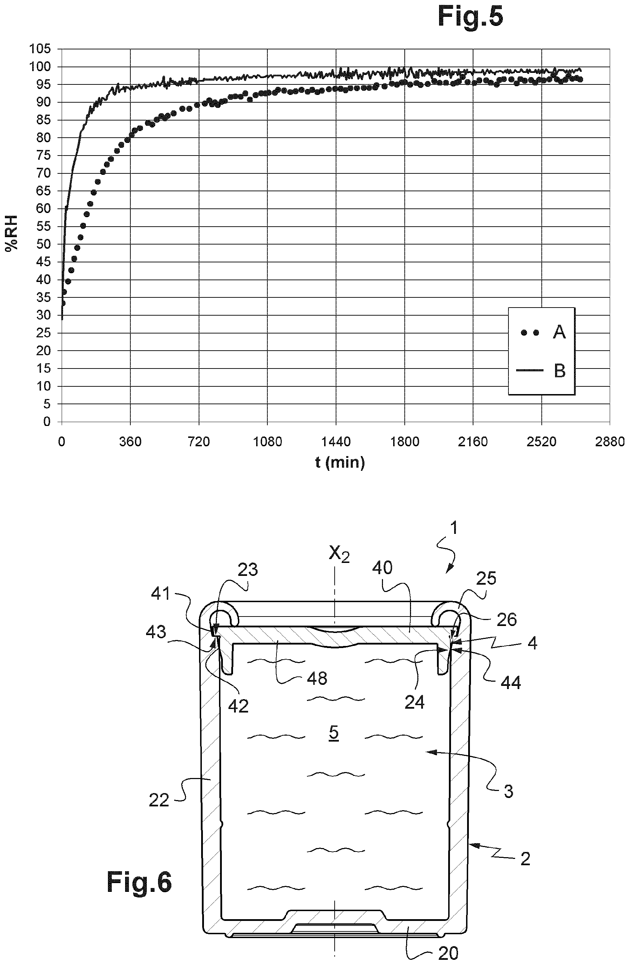

Figure 5 is a graph showing the evolution of the relative humidity level over time in the headspace of a glass container having a volume of 250 mL, said glass container being moisture-tightly closed by a rubber plug and comprising in its inner volume a humidity control capsule similar to that of Figure 1 which has been filled with 1.5 g of water, the curve "A" showing the case where the humidity control capsule is provided with both the cap portion and the stiffening cover, whereas the curve "B" shows the case where the humidity control capsule is provided with the cap portion but does not have a stiffening cover;
Figure 6 is a cross section similar to Figure 2 for a receptacle according to a second embodiment of the invention, which is a humidity control capsule having its chamber filled with a humidity control liquid, for example a saturated aqueous salt solution, a glycerol-water mixture, etc.;
Figure 7 is a top view of the cap portion of the humidity control capsule of Figure 6 on the side of the sealing skirt; and
Figure 8 is a cross section similar to Figure 2 for a receptacle according to a third embodiment of the invention, which is a humidity control stopper having its chamber filled with a humidity control liquid, for example a saturated aqueous salt solution, a glycerol-water mixture, etc.

### ILLUSTRATIVE EMBODIMENTS OF THE INVENTION

In the first embodiment shown in Figures 1 to 4, the receptacle of the invention is a humidity control capsule 1, e.g. intended to be dropped in a packaging in which moisture-sensitive products are stored, such as tablets or capsules containing a pharmaceutical composition; nutraceuticals; herbalism products; diagnostic products. The capsule 1 comprises a body portion 2 and a cap portion 4 configured to close an open end 26 of the body portion 2. The body portion 2 has a tubular shape, with a bottom wall 20 and a side wall 22 centered on a longitudinal axis X₂. The body portion 2 and the cap portion 4 define together a chamber 3 for an active substance 5. In the example shown in Figure 2, the active substance is a liquid, which may be, e.g., a saturated aqueous salt solution, a glycerol-water mixture, etc.

As can be seen in the cross section of Figure 2, the side wall 22 of the body portion defines a transverse flange 23 in the vicinity of the open end 26. The cap portion 4 comprises a base wall 40 and a sealing skirt 42. The sealing skirt 42 is internally offset relative to the outer periphery 41 of the base wall 40, so that a transverse edge 43 is defined between the sealing skirt 42 and the outer periphery 41 of the base wall. In the assembled configuration of the body portion 2 and the cap portion 4 as shown in Figure 2, the cap portion 4 is in a sealing position in which its transverse edge 43 is in abutment against the transverse flange 23 of the body portion 2 and its sealing skirt 42 is pressed against an inner surface 24 of the side wall 22. In this configuration, a liquid-tight seal is formed between the body portion 2 and the cap portion 4. The cap portion 4 is made of a polymer-based material which is impermeable to liquids and permeable to gases, whereas the body portion 2 is made of a polymer-based material which is impermeable to liquids and gases. In the assembled configuration of the capsule 1, air can flow through the gas-permeable cap portion 4, so that the active substance 5 contained in the capsule can regulate the atmosphere outside the capsule.

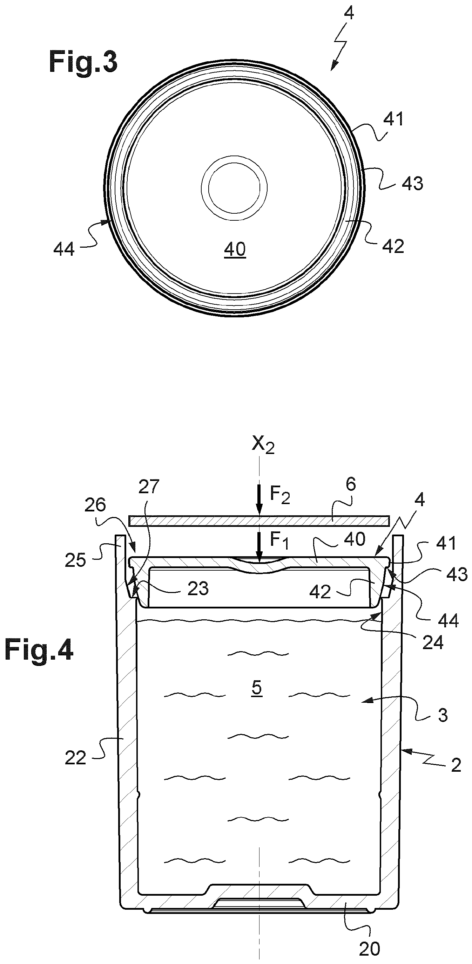

As visible in Figure 4, before assembly with the body portion 2, the sealing surface 44 of the sealing skirt 42 is inwardly slanted. The tapered shape of the sealing skirt 42 allows the cap portion 4 to be pre-positioned and pre-centered in the open end 26 of the body portion 2, so that the displacement of the cap portion 4 toward its sealing position can be achieved by simply applying a pushing force F₁ on the cap portion 4 parallel to the longitudinal axis X₂. In this embodiment, the cap portion 4 is secured to the body portion 2 by press fitting between the sealing skirt 42 of the cap portion and the inner surface 24 of the side wall 22 of the body portion.

The body portion 2 also comprises a lip 25 which extends from the side wall 22 beyond the transverse flange 23. The inner surface 27 of the lip 25 forms a guiding surface, which is slanted inwardly toward the transverse flange 23. The guiding surface is designed to automatically position the cap portion 4 in its sealing position, by ensuring an automatic centering of the cap portion relative to the body portion. Then, the pushing force F₁ may be applied on the cap portion 4 while the body portion 2, pre-filled with the active substance 5, is held stationary. Advantageously, the lip 25 is also configured to be crimped around the periphery of the cap portion 4 so as to maintain the cap portion 4 in its sealing position. In this first embodiment, the capsule 1 further comprises a gas-permeable stiffening cover 6, configured to be brought and secured in contact with the base wall 40 of the cap portion 4 when the cap portion is in its sealing position, as shown by the arrow F₂ of Figure 4. The stiffening cover 6 makes it possible to stiffen the structure of the cap portion 4, and thus reinforce the liquid-tight seal between the body portion 2 and the cap portion 4, while still preserving the gas-permeability of the capsule 1.

As visible in Figure 2, the stiffening cover 6 is also held in place by the lip 25 of the body portion 2, which is crimped at the periphery of both the stiffening cover 6 and the cap portion 4 disposed on top of each other. In this configuration, the axial pressure exerted by the crimped lip 25 is transmitted to the cap portion 4 by the stiffening cover 6. The stiffening cover 6 and the cap portion 4 are both compressed between the transverse flange 23 and the crimped lip 25 of the body portion, which contributes to the liquid-tightness of the capsule 1. By way of a nonlimiting example of a capsule 1 according to the first embodiment: the body portion 2 may be an injection-molded part made of polypropylene; the cap portion 4 may be an injection-molded part made of PEBAX^{®} MV1074 SA01 MED from Arkema; the gas-permeable stiffening cover 6 may be a cardboard disc.

A method for manufacturing the capsule 1 comprises the following steps. First, the body portion 2 is filled with the active substance 5. Then, the cap portion 4 is pre-positioned in the open end 26 of the body portion, with its sealing skirt 42 in contact with the transverse flange 23, as shown in Figure 4. The cap portion 4 is then displaced toward its sealing position by applying a pushing force F₁ on the cap portion 4 parallel to the longitudinal axis X₂, until the cap portion 4 reaches its sealing position in which its transverse edge 43 is in abutment against the transverse flange 23 of the body portion and its sealing skirt 42 is press fitted against the inner surface 24 of the side wall 22 of the body portion. When the cap portion is in its sealing position, the open end 26 of the body portion is already liquid-tightly closed.

To increase the liquid-tightness, the gas-permeable stiffening cover 6 is positioned in contact with the base wall 40 of the cap portion, as shown by the arrow F₂ of Figure 4. Finally, the lip 25 of the body portion is crimped around the periphery of both the stiffening cover 6 and the cap portion 4 disposed on top of each other. Advantageously, the manufacturing method of the capsule 1 can be totally automated, with a low reject rate, thanks to the designs of body portion and the cap portion with engaging surfaces. In particular, it was possible to produce more than about 80 capsules per minute with an automated assembly of the body portion 2 and the cap portion 4.

Performance tests of the capsules 1 have also been carried out, including tests to evaluate their water vapor absorption rate, their water vapor release rate, their capacity to regulate the relative humidity, and their liquid-tightness. The test conditions and results are described below in EXAMPLES 1 to 4.

### EXAMPLE 1: Water vapor absorption rate of a capsule filled with a desiccant

Two sets A and B of capsules 1, comprising a body portion 2 and a cap portion 4 similar to those of the first embodiment shown in Figures 1 to 4, were produced and filled with about 1 g of a desiccant (4Å molecular sieve). The capsules 1 of Set A comprise both a cap portion 4 and a stiffening cover 6 in the form of a cardboard disc, whereas the capsules 1 of Set B comprise only a cap portion 4, without any stiffening cover.

Each body portion 2 was injection-molded from polypropylene. Each cap portion 4 was injection molded from PEBAX^{®} MV1074 SA01 MED available from Arkema. For the two sets A and B, the diameter of the cap portion 4, measured inside the sealing skirt 42, is 10.7 mm and the average wall thickness of the cap portion 4 in the region located inside the sealing skirt 42 is 0.5 mm. For Set A, the stiffening cover 6 is a cardboard disc having a diameter of 12,4 mm ± 0.2 mm, a thickness of 555 µm ± 4% and a density of 320 g/m² ± 6%.

The samples were identified with a unique identification number and their initial weight was recorded, prior to placement of the samples in a climatic chamber regulated at 40°C, 75%RH. After 24 hours of storage in the climatic chamber, the samples were weighted again.

The water vapor absorption rate in mg/24 hours of the capsules 1 was evaluated from the weight difference after 24 hours of storage in the climatic chamber. The results are given in Table 1 below.

**Table 1: Water vapor absorption rate (mg/24 hours at 40°C, 75%RH) of the capsules filled with a desiccant (4Å molecular sieve):**

| | Set A (cap portion & stiffening cover) | Set B (cap portion only) |
|---|---|---|
| Sample 1 | 45 | 66 |
| Sample 2 | 51 | 69 |
| Sample 3 | 50 | 67 |
| Sample 4 | 51 | 57 |
| Sample 5 | 51 | 68 |
| **Average** | **49** | **65** |
| **RSD (%)** | **5.0%** | **7.6%** |

In average, the water vapor absorption rate of the capsules 1 having a stiffening cover 6 is about 35% less than the water vapor absorption rate of the same capsules 1 without a stiffening cover.

### EXAMPLE 2: Water vapor release rate of a capsule filled with water

Another set of capsules 1, similar to those of EXAMPLE 1, were filled with 1.5 g of liquid water instead of a desiccant, in order to evaluate their capacity to release moisture to the surrounding atmosphere.

The samples were identified with a unique identification number and their initial weight was recorded, prior to placement of the samples into a sealed glass container filled with a desiccant (4Å molecular sieve). The sealed glass container with the test samples was stored for 24 hours at 40°C. After 24 hours of storage in the climatic chamber, the samples were weighted again.

The water vapor release rate in mg/24 hours of the capsules 1 was evaluated from the weight difference after 24 hours of storage in the climatic chamber. The results are given in Table 2 below.

**Table 2: Water vapor release rate (mg/24 hours at 40°C, 0%RH) of the capsules filled with liquid water:**

| | Set A (cap portion & stiffening cover) | Set B (cap portion only) |
|---|---|---|
| Sample 1 | 226 | 326 |
| Sample 2 | 216 | 330 |
| Sample 3 | 225 | 329 |
| **Average** | **223** | **328** |
| **RSD (%)** | **2%** | **1%** |

In average, the water vapor release rate of the capsules 1 having a stiffening cover 6 is about 35% less than the water vapor release rate of the same capsules 1 without a stiffening cover.

By taking into account the difference in the relative humidity gradient, the water vapor release rate of each set of capsules 1 was found to be more than three times higher than the water vapor absorption rate. More specifically, the relative humidity gradient in EXAMPLE 1 is 75%RH, assimilated to 0%RH in a capsule 1 filled with desiccant and 75%RH in the climatic chamber. The relative humidity gradient in EXAMPLE 2 is 100%RH. Then, for the capsules 1 of Set A (cap portion and stiffening cover), a ratio of the water vapor release rate to the water vapor absorption rate of the capsules 1 is: 75/100 x 223 (water vapor release rate) / 49 (water vapor absorption rate) = 3.4. For the capsules 1 of Set B (cap portion only), a ratio of the water vapor release rate to the water vapor absorption rate of the capsules 1 is: 75/100 x 328 (water vapor release rate) / 65 (water vapor absorption rate) = 3.8.

### EXAMPLE 3: Evolution of the regulated relative humidity level overtime

The same capsules 1 as in EXAMPLE 2, i.e. capsules of Set A and Set B filled with 1.5 g of liquid water, were placed in a sealed glass container, which was an Erlenmeyer having a volume of 250mL, with a datalogger to record the relative humidity level in the glass container over time.

The results are shown in the graph of Figure 5 where the curve "A" corresponding to the Set A where the humidity control capsule 1 is provided with both the cap portion 4 and the stiffening cover 6, whereas the curve "B" corresponds to the Set B where the humidity control capsule is provided with the cap portion 4 but does not have a stiffening cover.

It can be seen from the graph of Figure 5 that the capsules 1 of both Set A and Set B were effective in regulating the relative humidity inside the glass container. In particular, for Set B, a relative humidity of 90%RH was reached in about half a day and a relative humidity higher than 95%RH was reached within less than two days.

### EXAMPLE 4: Liquid tightness (Leak testing under vacuum)

The same capsules 1 as in EXAMPLE 2, i.e. capsules of Set A and Set B filled with 1.5 g of liquid water, were placed in a vacuum chamber.

A negative pressure of -335 mbar was applied for one hour in the vacuum chamber. After returning to the atmospheric pressure, the samples were visually inspected for the absence of liquid leakage.

Test result: 100% PASS for both Set A (cap portion and stiffening cover) and Set B (cap portion only).

Then, a negative pressure of -600 mbar was applied for 10 minutes in the vacuum chamber where the samples of Set A (cap portion and stiffening cover) were placed. After returning to the atmospheric pressure, the samples were visually inspected for the absence of liquid leakage.

Test result: 100% PASS for Set A.

Comparative Example: a similar vacuum leak test with a negative pressure of -335 mbar was carried out for capsules having the same structure as those of Set A and Set B but except that the cap portion did not comprise a sealing skirt 42. In this case, the cap portion was a disc and the sealing was obtained by engagement of the outer periphery 41 of the cap portion against the inner surface 24 of the side wall 22 of the body portion 2. In this Comparative Example, the samples did not systematically succeed the leak test. In addition, an automated manufacturing process was difficult to implement with such disc-shaped cap portions, which were difficult to bring into their sealing position due to the interference on the outer periphery.

As it emerges from the above, a capsule 1 according to the first embodiment of the invention proved to be adapted for: an automated manufacturing method, as it was possible to produce more than about 80 capsules per minute with an automated assembly of the body portion 2 and the cap portion 4; tightly holding liquids, as shown by the results of the vacuum leak test of EXAMPLE 4; regulating atmospheric conditions within a substantially moisture tight container, as shown by the results of the evolution of the relative humidity over time of EXAMPLE 3. In addition, a capsule 1 according to the first embodiment, with a water vapor release rate more than three times higher than its water vapor absorption rate, is particularly suitable for acting as a humectant, i.e. for providing active humidity control of the headspace of packaging or devices in which stored products, such as food products, herbal medicine products, cannabis products, etc., need to be kept at a high water activity.

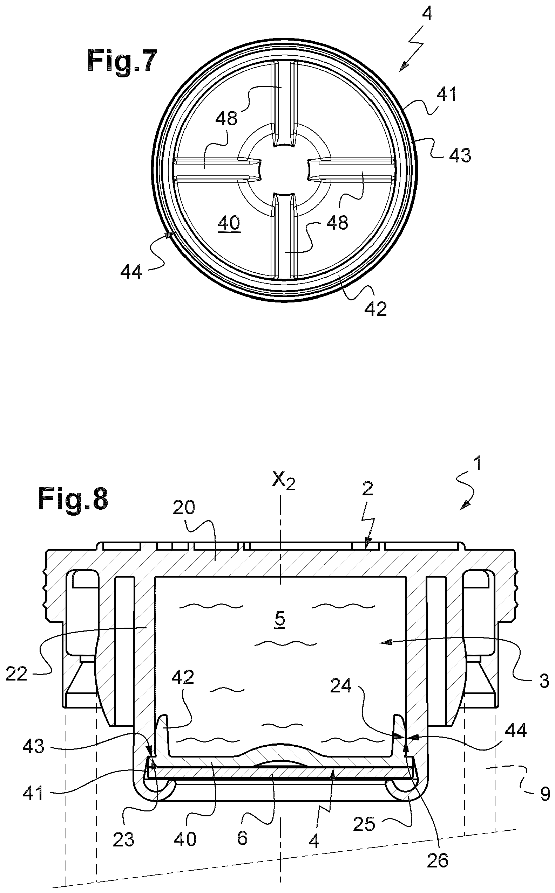

In the second embodiment shown in Figures 6 and 7, elements that are similar to those of the first embodiment have the same references. The receptacle of the second embodiment is a capsule 1 which differs from the first embodiment in that the base wall 40 of the cap portion 4 comprises reinforcing ribs 48, which extend radially across the inner surface of the base wall 40, internally relative to the sealing skirt 42. The reinforcing ribs 48 provide structural support for the cap portion 4, thus improving the liquid-tight seal between the body portion 2 and the cap portion 4. The reinforcing ribs 48 also improve the squeeze resistance of the capsule 1. Thanks to the presence of the reinforcing ribs 48, the addition of a stiffening cover 6 on top of the cap portion 4 to stiffen the structure of the cap portion 4 may not be necessary, and the structure of the capsule 1 can be simplified as shown in Figure 6. Since the other features of the second embodiment are identical to those of the first embodiment, reference is made to the description of the first embodiment above.

In the third embodiment shown in Figure 8, elements that are similar to those of the first embodiment have the same references. The receptacle of the second embodiment differs from the first embodiment in that it is a stopper 1 instead of being a capsule. The stopper 1 is configured to seal a container 9 in which sensitive products are stored, and additionally regulate the atmosphere inside the container 9. As in the previous embodiments, the stopper 1 comprises a body portion 2 and a cap portion 4 configured to close an open end 26 of the body portion 2. Here also, the body portion 2 has a tubular shape, with a bottom wall 20 and a side wall 22 centered on a longitudinal axis X₂. The body portion 2 and the cap portion 4 define together a chamber 3 for an active substance 5, e.g. a liquid active substance such as a saturated aqueous salt solution, a glycerol-water mixture, etc. In this third embodiment, the cap portion 4 of the stopper 1 has the same structure as in the first embodiment and is combined with a gas-permeable stiffening cover 6 to stiffen the structure of the cap portion 4, and thus reinforce the liquid-tight seal between the body portion 2 and the cap portion 4, while still preserving the gas-permeability of the capsule 1. Here again, since the other features of the third embodiment are identical to those of the first embodiment, reference is made to the description of the first embodiment above.

The invention is not limited to the examples described and shown.

In particular, the invention has been illustrated for a capsule or a stopper. However, it may also be implemented for other types of receptacles known in the art for atmosphere regulation, for example for canisters, e.g. having snap-fastened caps. In addition, the body portion of a receptacle according to the invention may be open at two or more ends, in which case it may be provided with two or more cap portions, each cap portion being configured to close one open end of the body portion.

The or each cap portion of a receptacle according to the invention may also be made of other breathable thermoplastic elastomers than polyether block amide (PEBA), for example thermoplastic polyurethanes, thermoplastic polyester elastomers, polypropylene-based thermoplastic elastomers, ethylene butyl acrylate (EBA), ethylene vinyl acetate (EVA), silicones.

Even if a receptacle according to the invention is particularly suitable for containing a liquid active substance, due to its good liquid-tightness properties, a receptacle according to the invention can also be used to contain an active substance in the form of a gel or a solid. In particular, another advantageous application of the receptacle of the invention is with an active substance in powder form with fine particles, the receptacle then being dust-free. Of course, many other variants can be considered, falling within the scope of the appended claims.

## Claims

1. Receptacle (1), such as a capsule, a canister or a stopper, for regulating an atmosphere in a packaging (9) or a medical device containing sensitive and/or odorous products, the receptacle (1) comprising a body portion (2) and at least one cap portion (4) configured to close an open end (26) of the body portion (2), the at least one cap portion (4) being impermeable to liquids and permeable to gases, the body portion (2) and the at least one cap portion (4) together defining a chamber (3) for an active substance (5), wherein the body portion (2) comprises a side wall (22) defining a transverse flange (23) in the vicinity of the open end (26), wherein the at least one cap portion (4) comprises a base wall (40) and a sealing skirt (42) internally offset relative to an outer periphery (41) of the base wall (40) so that a transverse edge (43) is defined between the sealing skirt (42) and the outer periphery (41) of the base wall, wherein, in the assembled configuration of the body portion (2) and the at least one cap portion (4), the at least one cap portion (4) is in a sealing position in which the sealing skirt (42) is sealingly pressed against an inner surface (24) of the side wall (22) in such a way that a liquid-tight seal is formed between the body portion (2) and the at least one cap portion (4), while the transverse edge (43) of the at least one cap portion (4) is in abutment against the transverse flange (23) of the body portion (2).

2. Receptacle according to claim 1 or claim 2, wherein the sealing skirt (42) of the at least one cap portion (4) has an inwardly slanted sealing surface (44) configured to be pressed against the inner surface (24) of the side wall (22) of the body portion (2).

3. Receptacle according to claim 1 or claim 2, wherein the at least one cap portion (4) is secured to the body portion (2) by press fitting between the sealing skirt (42) of the at least one cap portion and the inner surface (24) of the side wall (22) of the body portion.

4. Receptacle according to any one of the preceding claims, wherein the body portion (2) comprises a guiding surface (27) for automatically positioning the at least one cap portion (4) in its sealing position, with its transverse edge (43) in abutment against the transverse flange (23) of the body portion and its sealing skirt (42) pressed against the inner surface (24) of the side wall of the body portion, upon relative displacement (Fi) of the body portion (2) and the at least one cap portion parallel to a main axis (X₂) of the open end (26) of the body portion.

5. Receptacle according to claim 4, wherein the body portion (2) comprises a lip (25) extending from the side wall (22) beyond the transverse flange (23), the guiding surface (27) being formed by an inner surface of the lip (25) which is slanted inwardly toward the transverse flange (23).

6. Receptacle according to any one of the preceding claims, wherein the body portion (2) comprises a lip (25) extending from the side wall (22) beyond the transverse flange (23), the lip (25) being configured to be crimped around the periphery of the at least one cap portion (4) so as to maintain the at least one cap portion (4) in its sealing position, with its transverse edge (43) in abutment against the transverse flange (23) of the body portion and its sealing skirt (42) pressed against the inner surface (24) of the side wall of the body portion.

7. Receptacle according to any one of the preceding claims, further comprising a gas-permeable stiffening cover (6) configured to be secured in contact with the base wall (40) of the at least one cap portion (4) when the at least one cap portion (4) is in its sealing position, with its transverse edge (43) in abutment against the transverse flange (23) of the body portion and its sealing skirt (42) pressed against the inner surface (24) of the side wall of the body portion.

8. Receptacle according to any one of the preceding claims, wherein the base wall (40) of the at least one cap portion (4) comprises at least one reinforcing rib (48).

9. Receptacle according to any one of the preceding claims, wherein the at least one cap portion (4) is made of a thermoplastic elastomer (TPE) having a Water Vapor Transmission Rate (WVTR) higher than or equal to 10 g.mm/m².day, preferably higher than or equal to 30 g.mm/m².day, at 38°C, 90%RH, for example a polyether block amide (PEBA).

10. Receptacle according to any one of the preceding claims, wherein the body portion (2) is made of a polymer-based material which is impermeable to liquids and gases.

11. Receptacle according to any one of the preceding claims, wherein the receptacle (1), comprising the body portion (2) and the at least one cap portion (4), has a water vapor absorption rate higher than or equal to 10 mg/day, preferably higher than or equal to 30 mg/day at 40°C, 75%RH.

12. Receptacle according to any one of the preceding claims, wherein, for the receptacle (1) comprising the body portion (2) and the at least one cap portion (4), a ratio of a water vapor release rate toward the outside of the receptacle to a water vapor absorption rate from the outside of the receptacle is higher than 2, preferably higher than 3, preferably higher than 4.

13. Receptacle according to any one of the preceding claims, wherein the chamber (3) of the receptacle (1) is at least partially filled with an active substance (5) in liquid or gel form, in particular an active substance configured to both absorb and release water vapor, such as a saturated aqueous salt solution or a glycerol-water mixture.

14. Method for manufacturing a receptacle according to any one of the preceding claims, comprising steps of:
- pre-positioning a cap portion (4) in an open end (26) of the body portion (2), with its sealing skirt (42) in contact with the transverse flange (23) of the body portion;
- securing the cap portion (4) so as to liquid-tightly close the open end (26) of the body portion (2), by moving (Fi) the body portion (2) and the cap portion (4) relative to each other, parallel to the main axis (X₂) of the open end (26) of the body portion, until the cap portion (4) reaches its sealing position in which its transverse edge (43) is in abutment against the transverse flange (23) of the body portion (2) and its sealing skirt (42) is pressed against an inner surface (24) of the side wall (22).

15. Method according to claim 14, wherein the body portion (2) comprises a lip (25) extending from the side wall (22) beyond the transverse flange (23), the method further comprising a step of crimping the lip (25) around the periphery of the cap portion (4) so as to maintain the cap portion (4) in its sealing position.

16. Method according to claim 14 or claim 15, wherein the body portion (2) comprises a lip (25) extending from the side wall (22) beyond the transverse flange (23), the lip (25) comprising a guiding surface (27) for automatically positioning the cap portion (4) in its sealing position upon relative displacement (F₁) of the body portion (2) and the cap portion parallel to the main axis (X₂) of the open end (26).

17. Use of a receptacle (1) according to any one of claims 1 to 13, having its chamber (3) at least partially filled with a humidity control substance, for controlling humidity in a packaging (9) or a medical device containing moisture-sensitive products, such as tablets or capsules containing a pharmaceutical composition; nutraceuticals; herbalism products; diagnostic products.
